# EUROPEAN PATENT APPLICATION

(11) **EP 4 793 692 A1**
(43) Date of publication of application: **19.08.2026**
(21) Application number: 24881049.1
(22) Date of filing: 14.06.2024
(51) Int. Cl.: G02F 1/03

(54) **FOLDING PHASE MODULATION MODULE AND ELECTRO-OPTICAL MODULATOR**

(30) Priority: 24.10.2023 CN 202311388591
(71) Applicant: Nanjing Lycore Technologies Co., Ltd., Nanjing, Jiangsu 210000 (CN)
(72) Inventor: LIANG, Hanxiao, Nanjing, Jiangsu 210000 (CN); SONG, Yipin, Nanjing, Jiangsu 210000 (CN); ZHOU, Yingcong, Nanjing, Jiangsu 210000 (CN); WU, Haicang, Nanjing, Jiangsu 210000 (CN); MAO, Wenhao, Nanjing, Jiangsu 210000 (CN); SONG, Shiwei, Nanjing, Jiangsu 210000 (CN); SUN, Weiqi, Nanjing, Jiangsu 210000 (CN); YU, Qingyang, Nanjing, Jiangsu 210000 (CN); ZHANG, Zhouyu, Nanjing, Jiangsu 210000 (CN)
(74) Representative: MFG Patentanwälte Meyer-Wildhagen Meggle-Freund Gerhard PartG mbB
(86) International application number: PCT/CN2024/099351
(87) International publication number: WO 2025/086672

(57) **Abstract**

Provided in the present disclosure are a folding phase modulation module and an electro-optical modulator. The folding phase modulation module in the present disclosure comprises a traveling wave electrode and a folding waveguide, wherein the traveling wave electrode comprises a first ground electrode, a first signal electrode, a second ground electrode, a second signal electrode and a third ground electrode, which are arranged spaced apart from one another, the traveling wave electrode comprises first linear extension portions, second linear extension portions and curved connection portions, the first linear extension portions and the second linear extension portions extending in a first direction and being alternately arranged in a second direction, and two ends of each curved connection portion being respectively connected to the first linear extension portion and the second linear extension portion which are adjacent to the curved connection portion, and the folding direction of the folding waveguide is the same as the folding direction of the traveling wave electrode, and the folding waveguide comprises a first waveguide and a second waveguide, the first waveguide and the second waveguide being configured such that same are applied with opposite electric fields by the first signal electrode at the first linear extension portions and are applied with opposite electric fields by the second signal electrode at the second linear extension portions.

## Description

### CROSS REFERENCE

The present application claims the priority to Chinese Patent Application No. 202311388591.X filed on October 24, 2023, entitled "FOLDING PHASE MODULATION MODULE AND ELECTRO-OPTICAL MODULATOR". The disclosure of the priority claimed by the present application is hereby incorporated by reference in its entirety.

### TECHNICAL FIELD

The present disclosure relates to the technical field of optical waveguides, in particular to a folding phase modulation module and an electro-optical modulator.

### BACKGROUND ART

In recent years, the rapid development of emerging network application services such as Internet of Things, unmanned driving, telemedicine, and distance education has put forward higher requirements for high-speed and large-capacity communication technologies. Optical communication has made rapid development in the field of high-speed and large-capacity communication due to its characteristics of large bandwidth, high reliability, low cost and strong anti-interference capacity, etc. How to load high-speed electrical signals onto optical carrier is a core research content. As a device that converts electrical signals into optical signals, electro-optical modulator is one of the core devices in optical interconnection, optical computing and optical communication systems. The performance of modulator plays an important role in the transmission distance and transmission speed of optical signals. With people's increasingly urgent demand for high-speed and large-capacity communication technology, higher requirements are put forward for the modulation rate of electro-optical modulators.

Electro-optical modulators are modulators made by using the electro-optical effect of certain electro-optical crystals, such as lithium niobate crystal (LiNb03), gallium arsenide crystal (GaAs) and lithium tantalate crystal (LiTa03). Electro-optical effect means that when a voltage is applied to an electro-optical crystal, the refractive index of the electro-optical crystal will change, resulting in changes in the characteristics of light waves passing through the crystal, thereby modulating the phase, amplitude, intensity and polarization state of the optical signal.

However, with people's increasingly urgent demand for high-speed and large-capacity communication technology, higher requirements are put forward for the modulation rate of electro-optical modulators.

### SUMMARY OF THE INVENTION

The embodiments of the present disclosure provide a folding phase modulation module and an electro-optical modulator to reduce the size of the phase modulation module and improve device performance.

According to one aspect of the present disclosure, a folding phase modulation module is provided, comprising a traveling wave electrode and a folding waveguide, the traveling wave electrode comprising a first ground electrode, a first signal electrode, a second ground electrode, a second signal electrode and a third ground electrode arranged spaced apart from one another, the traveling wave electrode comprising at least one first linear extension portion, at least one second linear extension portion and at least one curved connection portion, the first linear extension portion and the second linear extension portion extending in a first direction and alternately arranged in a second direction different from the first direction, and the two ends of any curved connection portion are respectively connected to adjacent first linear extension portions and second linear extension portions; the folding direction of the folding waveguide is the same as the folding direction of the traveling wave electrode, the folding waveguide comprising a first waveguide and a second waveguide, the first waveguide and the second waveguide being configured such that the first waveguide and the second waveguide are applied with opposite electric fields by the first signal electrode at the first linear extension portion, and are applied with opposite electric fields by the second signal electrode at the second linear extension portion.

In some embodiments, the first waveguide comprises a plurality of first linear waveguide portions spaced apart from one another along the second direction, and a first curved waveguide portion connecting two adjacent first linear waveguide portions; the second waveguide comprises a plurality of second linear waveguide portions spaced apart from one another along the second direction, and a second curved waveguide portion connecting two adjacent second linear waveguide portions; in the first linear extension portion, the first linear waveguide portion and the second linear waveguide portion are respectively located on both sides of the first signal electrode; and in the second linear extension portion, the first linear waveguide portion and the second linear waveguide portion are respectively located on both sides of the second signal electrode.

In some embodiments, in the first linear extension portion, the first linear waveguide portion is located between the first signal electrode and the first ground electrode, and the second linear waveguide portion is located between the first signal electrode and the second ground electrode. In the second linear extension portion, the first linear waveguide portion is located between the second signal electrode and the third ground electrode, and the second linear waveguide portion is located between the second signal electrode and the second ground electrode.

In some embodiments, the first linear waveguide portion and the second linear waveguide portion both extend along the first direction, and a length of the first linear waveguide portion is different from a length of the first signal electrode in the first linear extension portion.

In some embodiments, the length of the first linear waveguide portion is different from the length of the second signal electrode in the second linear extension portion.

In some embodiments, the length of the second linear waveguide portion is different from the length of the first signal electrode in the first linear extension portion.

In some embodiments, the length of the second linear waveguide portion is different from the length of the second signal electrode in the second linear extension portion.

In some embodiments, the transmission speed of the optical signal in the waveguide is greater than the transmission speed of the radio frequency signal in the traveling wave electrode, and the length of the first linear waveguide portion and the length of the second linear waveguide portion are both greater than the length of the first signal electrode in the first linear extension portion and the length of the second signal electrode in the second linear extension portion.

In some embodiments, the transmission speed of the optical signal in the waveguide is lower than the transmission speed of the radio frequency signal in the traveling wave electrode, and the length of the first linear waveguide portion and the length of the second linear waveguide portion are both greater than the length of the first signal electrode in the first linear extension portion and the length of the second signal electrode in the second linear extension portion.

In some embodiments, the product of the length of the first curved waveguide portion and the effective refractive index of the first waveguide is Q1, the product of the length of the second curved waveguide portion and the effective refractive index of the second waveguide is Q2, and 0≤|Q1-Q2|/min{Q1,Q2}≤0.5 is satisfied.

In some embodiments, the length of the first curved waveguide portion is the same as the length of the second curved waveguide portion.

In some embodiments, the length of the first curved waveguide portion is greater than the length of the second curved waveguide portion, and the cross-sectional area of the first curved waveguide portion is smaller than the cross-sectional area of the second curved waveguide portion.

In some embodiments, the first signal electrode and the second signal electrode are configured to receive differential signals.

In some embodiments, the electrode structure of the first signal electrode in the first linear extension portion is different from the electrode structure of the first signal electrode in the second linear extension portion.

In some embodiments, the electrode structure of the second signal electrode in the first linear extension portion is different from the electrode structure of the second signal electrode in the second linear extension portion.

In some embodiments, the first ground electrode, the second ground electrode, and the third ground electrode are connected to one another at the curved connection portion.

According to another aspect of the present disclosure, an electro-optical modulator is provided, comprising the folding phase modulation module described above.

According to one or more embodiments of the present disclosure, the phases of the first and second waveguides in the folding phase modulation module are changed by different signal electrodes in a traveling wave electrode before and after a turn, which simplifies the velocity matching between the waveguides and the signal electrodes, thereby reducing the size of the phase modulation module and lowering transmission loss.

It should be appreciated that the contents described in this section are not intended to identify the key or important features of the embodiments of the present disclosure, nor are they intended to limit the scope of the present disclosure. Other features of the present disclosure will become readily understood through the following description.

### BRIEF DESCRIPTION OF THE DRAWINGS

Further details, features, and advantages of the present disclosure are disclosed in the following description of exemplary embodiments in conjunction with the accompanying drawings, in which:
FIG. 1 is a schematic diagram of the structure of a folding phase modulation module according to some exemplary embodiments of the present disclosure;
FIG. 2 is a schematic diagram of the structure of a folding phase modulation module according to some other exemplary embodiments of the present disclosure;
FIG. 3 is a schematic diagram of the structure of a folding phase modulation module according to some further exemplary embodiments of the present disclosure;
FIG. 4 is a schematic diagram of the structure of a folding phase modulation module according to some still further exemplary embodiments of the present disclosure;
FIG. 5 is a schematic diagram of the structure of an electro-optical modulator according to some exemplary embodiments of the present disclosure.

### Explanation of Reference Signs:

Folding phase modulation module 100, electro-optical modulator 200; traveling wave electrode 110, first ground electrode 111, first signal electrode 112, second ground electrode 113, second signal electrode 114, third ground electrode 115; first linear extension portion 110A, curved connection portion 110B, second linear extension portion 110C; Folding waveguide 120, first waveguide 121, first linear waveguide portion 121A, first curved waveguide portion 121B, second waveguide 122, second linear waveguide portion 122A, second curved waveguide portion 122B; light splitting unit 210, light combining unit 220; first direction X, second direction Y.

### DETAILED DESCRIPTION OF EMBODIMENTS

Exemplary embodiments of the present disclosure are described below in conjunction with the accompanying drawings, which include various details of the embodiments of the present disclosure to facilitate understanding, and should be regarded as merely exemplary. Therefore, those skilled in the art will appreciate that various changes and modifications may be made to the embodiments described herein without departing from the scope of the present disclosure. Likewise, for clarity and simplicity, descriptions of well-known functions and structures are omitted in the following description.

In the present disclosure, unless otherwise stated, use term "first", "second" etc. to describe various key elements and do not intend to limit the positional relationship, temporal relationship or the importance relationship of these key elements, such term is just used to distinguish a key element from another key element. In some embodiments, first key element and second key element can point to the same instance of this key element, and in some cases, based on the description of context, they also can refer to different instances.

The term used in the description of various described examples in the present disclosure is merely for the purpose of describing specific examples, and is not intended to limit. Unless context clearly indicates in addition, if the quantity of the key element is not specifically limited, then this key element can be one and can also be multiple. In addition, the term "and/or" used in the present disclosure contains any one and all possible combinations of the listed items.

Electro-optical modulators often employ Mach-Zehnder optical waveguides. Mach-Zehnder optical waveguides consist of an input waveguide for introducing light from the outside, a branching portion for splitting the light introduced by the input waveguide into two propagation paths, two parallel waveguides for propagating each of the branched light in the rear section of the branching portion, and an output waveguide for combining the light beams propagating through the two parallel waveguides and outputting the combined beams to the outside. Mach-Zehnder optical modulators include control electrodes for controlling changes of the phase of light waves propagating through the parallel waveguides by applying a voltage and thereby utilizing the electro-optical effect. The control electrodes typically consist of an radio frequency (high frequency) signal electrode (hereinafter referred to as a "signal electrode") formed in the upper section of or near the parallel waveguides and a ground electrode configured separately from the signal electrode.

The embodiments of the present disclosure provide a folding phase modulation module and an electro-optical modulator to simplify the velocity matching between the waveguide and the signal electrode, thereby reducing the size of the phase modulation module and reducing the transmission loss, and thereby improving the performance of the device.

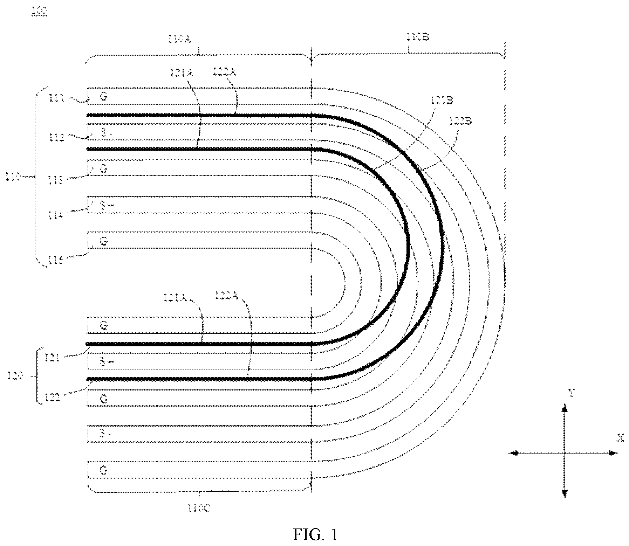

As shown in FIG. 1, according to one aspect of the present disclosure, a folding phase modulation module 100 is provided. The folding phase modulation module 100 comprises a traveling wave electrode 110 and a folding waveguide 120. The traveling wave electrode 110 comprise a first ground electrode 111, a first signal electrode 112, a second ground electrode 113, a second signal electrode 114, and a third ground electrode 115, which are spaced apart from one another. The traveling wave electrode 110 comprises at least one first linear extension portion 110A, at least one second linear extension portion 110C, and at least one curved connection portion 110B. The first linear extension portion 110A and the second linear extension portion 110C extend along a first direction X and are alternately arranged along a second direction Y. The two ends of any curved connection portion 110B are respectively connected to the adjacent first linear extension portion 110A and the adjacent second linear extension portion 110C. The first direction X intersects the second direction Y. The folding direction of the folding waveguide 120 is the same as the folding direction of the traveling wave electrode 110, and the folding waveguide 120 comprises a first waveguide 121 and a second waveguide 122. The first waveguide 121 and the second waveguide 122 are configured such that the first waveguide 121 and the second waveguide 122 are applied with opposite electric fields by the first signal electrode 112 at the first linear extension portion 110A, and are applied with opposite electric fields by the second signal electrode 114 at the second linear extension portion 110C.

The folding phase modulation module 100 has a bending structure or a continuous multi-bending structure in which linear portions and bending portions are alternately arranged on the plane where the first direction X and the second direction Y are located. Wherein, the first linear extension portion 110A and the second linear extension portion 110C of the traveling wave electrode 110 extend along the first direction X and are alternately arranged along the second direction Y. In some embodiments, the length of the first linear extension portion 110A along the first direction X may be the same as or different from the length of the second linear extension portion 110C along the first direction X. The curved connection portion 110B may be arc-shaped, such as a semicircular arc. The curved connection portion 110B may or may not comprise a linear line section. In some embodiments, the first direction X and the second direction Y are both parallel to the plane where the substrate of the folding phase modulation module 100 is located, and the first direction X is perpendicular to the second direction Y.

The potentials at the first ground electrode 111, the second ground electrode 113, and the third ground electrode 115 are ground potential G, with grounding can be achieved, for example, by connecting to a ground line. The first signal electrode 112 and the second signal electrode 114 are used to receive corresponding drive signals, thereby forming an electric field with a certain potential difference between the signal electrodes and the ground electrode, and within such electric field the phase of the light wave in the waveguide can be modulated. The second ground electrode 113 provided between the first signal electrode 112 and the second signal electrode 114, on the one hand, can form an electric field for phase modulation with the two signal electrodes respectively, and on the other hand, can reduce crosstalk between two adjacent signal electrodes, thereby is advantageous for improving the modulation effect.

The first ground electrode 111, the first signal electrode 112, the second ground electrode 113, the second signal electrode 114 and the third ground electrode 115 are folding as a whole and do not cross one another. The shape of the folding waveguide 120 can be compatible with the shape of the traveling wave electrode 110, and the folding direction of the folding waveguide 120 is the same as the folding direction of the traveling wave electrode 110. For example, the folding waveguide 120 can comprise linear sections corresponding to the linear extension portions of the traveling wave electrode 110 and curved connecting sections corresponding to the curved connecting portions of the traveling wave electrode 110. The folding phase modulation module 100 is in an overall S-shaped bend shape as a whole, which can reduce the device's size in the length direction (first direction X), and is advantageous for device miniaturization and integration.

Since the first signal electrode 112 and the second signal electrode 114 have different bending lengths in the curved connection portion 110B, the delay of the electrical signal before and after the turn will also be different, which will bring greater difficulties to the speed matching between the waveguide and the signal electrodes. In this embodiment, in the first linear extension portion 110A before the turn, the first waveguide 121 and the second waveguide 122 are both provided with a modulated electric field by the first signal electrode 112. In the second linear extension portion 110C after the turn, the first waveguide 121 and the second waveguide 122 are both provided with a modulated electric field by the second signal electrode 114. In this way, it is only necessary to match the speed of the waveguide and the second signal electrode. Compared to that the first waveguide 121 is provided with the electric field for phase modulation by the first signal electrode 112, and that the second waveguide 122 is provided with the electric field for phase modulation by the second signal electrode 114, after the turn, due to the different delays of the first signal electrode 112 and the second signal electrode 114, it is necessary to re-match the speeds of the optical signal in the first waveguide 121 and the electrical signal in the first signal electrode 112, as well as the speeds of the optical signal in the second waveguide 122 and the electrical signal in the second signal electrode 124. This embodiment only needs to match the light speed in the waveguide with the electric signal transmission speed in the signal electrode which applies the electric field, thereby being more conducive to reducing transmission loss and improving electro-optical modulation efficiency.

In some embodiments, the first waveguide 121 comprises a plurality of first linear waveguide portions 121A spaced apart from one another along the second direction Y, and a first curved waveguide portion 121B connecting two adjacent first linear waveguide portions 121A; the second waveguide 122 comprises a plurality of second linear waveguide portions 122A spaced apart from one another along the second direction Y, and a second curved waveguide portion 122B connecting two adjacent second linear waveguide portions 122A. In the first linear extension portion 110A, the first linear waveguide portion 121A and the second linear waveguide portion 122A are respectively located on both sides of the first signal electrode 112. In the second linear extension portion 110C, the first linear waveguide portion 121A and the second linear waveguide portion 122A are respectively located on both sides of the second signal electrode 114.

Ground electrodes are provided on both sides of the first signal electrode 112 respectively. When a voltage is applied to the first signal electrode 112, electric fields in opposite directions are formed on both sides of the first signal electrode 112. Similarly, when a voltage is applied to the second signal electrode 114, electric fields in opposite directions are also formed on both sides. Therefore, arranging the first waveguide 121 and the second waveguide 122 on both sides of a single signal electrode can achieve phase modulation within the first waveguide 121 and the second waveguide 122.

In some embodiments, the first linear waveguide portion 121A and the second linear waveguide portion 122A may also be located on both sides of the second signal electrode 114 in the first linear extension portion 110A, and on both sides of the first signal electrode 112 in the second linear extension portion 110C.

The first signal electrode 112 and the second signal electrode 114 can input different radio frequency voltages according to modulation requirements, thereby improving modulation efficiency.

In some embodiments, in the first linear extension portion 110A, the first linear waveguide portion 121A is located between the first signal electrode 112 and the first ground electrode 111, and the second linear waveguide portion 122A is located between the first signal electrode 112 and the second ground electrode 113; in the second linear extension portion 110C, the first linear waveguide portion 121A is located between the second signal electrode 114 and the third ground electrode 115, and the second linear waveguide portion 122A is located between the second signal electrode 114 and the second ground electrode 113.

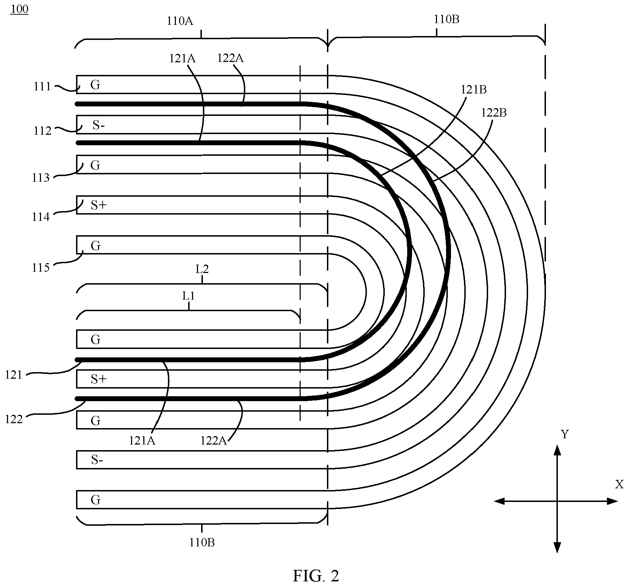

In some embodiments, as shown in FIG. 2, FIG. 2 is a schematic diagram of the structure of a folding phase modulation module according to some other exemplary embodiments of the present disclosure. In the folding phase modulation module 100, the first linear waveguide portion 121A and the second linear waveguide portion 122A both extend along the first direction X. The length of the first linear waveguide portion 121A is different from the length of the first signal electrode 112 in the first linear extension portion 110A and/or the length of the second signal electrode 114 in the second linear extension portion 110C; the length of the second linear waveguide portion 122A is different from the length of the first signal electrode 112 in the first linear extension portion 110A and/or the length of the second signal electrode 114 in the second linear extension portion 110C.

The length of the first signal electrode 112 in the first linear extension portion 110A refers to the length of the portion of the first signal electrode 112 that linearly extends along the first direction X in the first linear extension portion 110A. Similarly, the length of the second signal electrode 114 in the second linear extension portion 110C refers to the length of the portion of the second signal electrode 114 that linearly extends along the first direction X in the second linear extension portion 110C.

Since it is difficult to keep the optical signal transmission speed of the waveguide consistent with the transmission speed of the radio frequency signal in the signal electrode, when designing the structure of the folding phase modulation module, the length of each linear extension part can be adjusted according to the specific structural form and transmission speed of the waveguide and the signal electrode. This can better achieve the matching and synchronization of the transmission speed of the optical signal in the waveguide and the transmission speed of the radio frequency signal in the signal electrode, thereby advantageous for improving the reliability of signal modulation.

In some embodiments, as shown in FIG 2, the transmission speed of the optical signal in the folding waveguide 120 is lower than the transmission speed of the radio frequency signal in the traveling wave electrode 110, and the length of the first linear waveguide portion 121A and the length of the second linear waveguide portion 122A are both greater than the length of the first signal electrode 112 in the first linear extension portion 110A and the length of the second signal electrode 114 in the second linear extension portion 110C.

As shown in FIG. 2, in the second linear extension portion 110C, along the first direction X, the lengths of the first linear waveguide portion 121A and the second linear waveguide portion 122A are both L1, and the lengths of the first signal electrode 112 and the second signal electrode 114 are both L2, wherein L1 is smaller than L2. This means that within the folding phase modulation module, the folding waveguide 120 begins to bend earlier, while the traveling-wave electrode bends later. In general, the length of the curved portion of the component that bends earlier will be shorter than the component that bends later. In this manner, the time required for the folding waveguide 120 that is bent earlier to pass through the bent waveguide portion to reach the second linear extension portion 110C is shorter than the time it takes for the radio frequency signal in the traveling wave electrode 110 to reach the second linear extension portion 110C. In this manner, the optical signal and the radio frequency signal can be synchronized at the starting position of the second linear extension portion 110C, thereby improving the modulation efficiency.

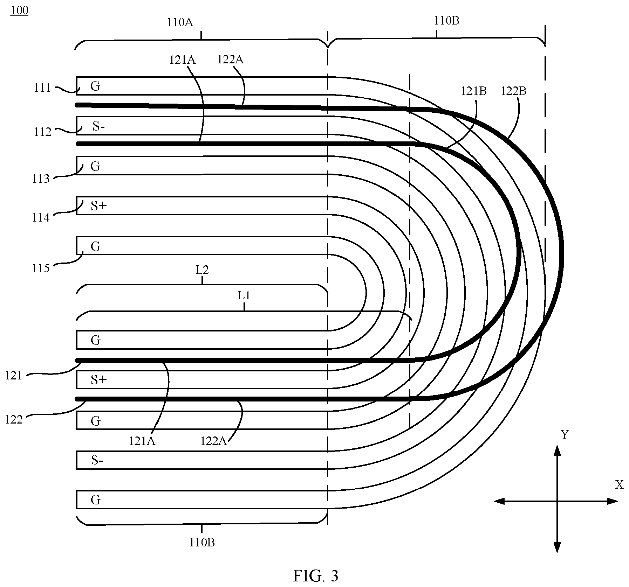

In some embodiments, as shown in FIG. 3, FIG. 3 is a schematic diagram of the structure of a folding phase modulation module according to some further exemplary embodiments of the present disclosure. In the folding phase modulation module 100, the transmission speed of the optical signal in the folding waveguide 120 is greater than the transmission speed of the radio frequency signal in the traveling wave electrode 110, and the length of the first linear waveguide portion 121A and the length of the second linear waveguide portion 122A are both greater than the length of the first signal electrode 112 in the first linear extension portion 110A and the length of the second signal electrode 114 in the second linear extension portion 110C.

As shown in FIG. 3, in the second linear extension portion 110C, along the first direction X, the lengths of the first linear waveguide portion 121A and the second linear waveguide portion 122A are both L1, and the lengths of the first signal electrode 112 and the second signal electrode 114 are both L2, wherein L1 is greater than L2. This means that within the folding phase modulation module 100, the traveling wave electrode 110 begins to bend first, and the folding waveguide 120 will bend later. In this manner, the optical signal with a higher transmission speed travels a relatively longer path, allowing it to synchronize with the radio frequency signal at the starting position of the second linear extension portion 110C. It will be appreciated that the length of the first linear waveguide portion 121A and the length of the second linear waveguide portion 122A can be the same or different. The lengths of the first signal electrode 112 and the second signal electrode 114 in the first linear extension portion 110A can be the same or different. The lengths of the first signal electrode 112 and the second signal electrode 114 in the second linear extension portion 110C can be the same or different.

In some embodiments, the product of the length of the first curved waveguide portion 121B and the effective refractive index of the first waveguide 121 is Q1, the product of the length of the second curved waveguide portion and the effective refractive index of the second waveguide is Q2, and 0≤|Q1-Q2|/min{ Q1, Q2}≤0.5 is satisfied.

The length of the curved waveguide portion refers to the cumulative length of the waveguide along its extension direction between the two linear waveguide portions. And the effective refractive index refers to the ratio of the propagation constant to the vacuum wave number in the waveguide. In the structural design of the waveguide, it is hoped that the transmission of the optical signal in the first waveguide and the second waveguide is as synchronous as possible, that is, the transmission time of the optical signal in the first waveguide and the second waveguide is required to be identical, and the transmission time is the ratio of the transmission length to the transmission speed, and the transmission speed is the speed of light divided by the effective refractive index of the waveguide. Since the speed of light is a fixed value, in order for the transmission time of the first waveguide and the second waveguide to be as close as possible, it is necessary that the product of the length of the waveguide and the effective refractive index cannot differ too much. Since the length of the curved waveguide portion is difficult to remain consistent, the synchronous transmission of the optical signals of the first waveguide and the second waveguide can be realized as much as possible by limiting the size relationship of the product of the length of the curved waveguide and the effective refractive index. Theoretically, a smaller value of |Q1-Q2|/min{Q1, Q2} means more synchronized signal transmission between the two waveguides. However, this also requires higher precision in waveguide fabrication, significantly increasing costs. Therefore, limiting this value to 0.5 or less balances the waveguide's transmission requirements and manufacturing costs, improving the device's overall performance.

In some examples, Q1 of the first curved waveguide portion 121B and Q2 of the second curved waveguide portion 122B may further satisfy: 0≤|Q1-Q2|/min{ Q1, Q2}≤0.3. In some examples, Q1 and Q2 may further satisfy: 0≤|Q1-Q2|/min{ Q1, Q2}≤0.1.

In some embodiments, the length of the first curved waveguide portion 121B is the same as the length of the second curved waveguide portion 122B.

In order to simplify the structure and facilitate manufacturing, the difference between the effective refractive indices of the first waveguide 121 and the second waveguide 122 is relatively small, and difference between the lengths of the linear waveguide portions are also generally relatively small. The length of the first curved waveguide portion 121B and the length of the second curved waveguide portion 122B can be adjusted to ensure that the optical signal is transmitted as synchronously as possible between the first waveguide 121 and the second waveguide. As shown in FIG. 2 and FIG. 3, in the area of the curved connection portion 110B, the first waveguide 121 is located outside the second waveguide 122. The overall bending radius of the first curved waveguide portion 121B is larger than that of the second curved waveguide portion 122B. Such length difference will cause a delay in the transmission of the optical signal in the first waveguide 121 and the second waveguide 122. The lengths of the two waveguides can be adjusted to be the same such that the transmission path of the optical signal in the area of the curved connection portion 110B is the same, thereby maintaining the synchronization of the optical signal.

In some examples, the second curved waveguide portion 122B may comprise a continuous curved curve, such as an S-shaped wavy line, such that although the overall bending radius of the second curved waveguide portion 122B is smaller than that of the first curved waveguide portion 121B, the cumulative length of the second curved waveguide is equal to the length of the first curved waveguide portion 121B. It is appreciated that the extension form of the second curved waveguide portion 122B can also be any other form, as long as the cumulative length is the same as the length of the first curved extension portion 121B.

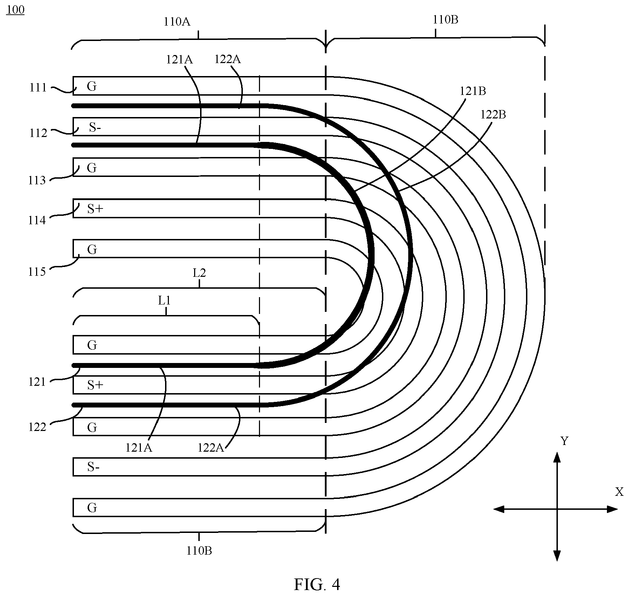

In some embodiments, as shown in FIG. 4, which is a schematic diagram of the structure of a folding phase modulation module according to some still other exemplary embodiments of the present disclosure. In the folding phase modulation module 100, the length of the first curved waveguide portion 121B is greater than the length of the second curved waveguide portion 122B, and the cross-sectional area of the first curved waveguide portion 121B is smaller than the cross-sectional area of the second curved waveguide portion 122B.

The cross-sectional areas of the first curved waveguide portion 121B and the second curved waveguide portion 122B refer to the cross-sectional areas along the direction perpendicular to the extension direction of the corresponding curved waveguide. In some embodiments, the folding waveguide 120 adopts a ridge waveguide design, which also includes a slab waveguide, with the first waveguide 121 and the second waveguide 122 located on a side of the slab waveguide away from the substrate and are integrally connected to the slab waveguide. In this case, the cross-sectional areas of the first curved waveguide portion 121B refer to the cross-sectional areas of the corresponding ridge waveguides.

In some embodiments, the first curved waveguide portion 121B and the second curved waveguide portion 122B have the same height, and the width of the first curved waveguide portion 121B is smaller than the width of the second curved waveguide portion 122B. The height herein refers to the dimension in a direction perpendicular to the plane where the first direction X and the second direction Y lie.

Since the optical signal is continuously transmitted forward through reflection in the waveguide, the propagation length of the optical signal can be increased by increasing the width of the curved waveguide portion, thereby adjusting the transmission time of the optical signal in the curved waveguide portion, such that the curved waveguide portions of the two waveguides are kept as synchronized as possible, thereby improving the modulation performance of the device.

In some embodiments, the first signal electrode 112 and the second signal electrode 114 are configured to receive differential signals.

The radio frequency voltage signals received by the first signal electrode 112 and the second signal electrode 114 are differential signals (ie, S+ and S-) with the same amplitude and opposite phases. The differential signal can provide a larger modulation voltage, thereby improving the modulation efficiency.

In some embodiments, the electrode structure of the first signal electrode 112 in the first linear extension portion 110A is different from that in the second linear extension portion 110C.

In some embodiments, the electrode structure of the second signal electrode 114 in the first linear extension portion 110A is different from that in the second linear extension portion 110C.

The electrode structure of the signal electrode has a direct impact on the modulation effect and radio frequency transmission loss. Therefore, the electrode structure can be adjusted according to the performance requirements of the signal electrodes in different locations. In some embodiments, in the first linear extension portion 110A, the first signal electrode 112 applies opposite electric fields to the first waveguide 121 and the second waveguide 122 to perform modulation. Sub-electrodes can be provided on the surface of the first signal electrode 112 facing the first waveguide 121 and/or the second waveguide 122. This is more conducive to adjusting the transmission speed of the waveguide and the transmission speed of the electrode to meet the speed matching requirement between the two. However, this will increase the radio frequency transmission loss to a certain extent. For example, a plurality of spaced-apart "T"-shaped sub-electrodes can be provided on the surface of the first signal electrode 112. While in the second linear extension portion 110C, since the first signal electrode 112 does not require modulation in this portion and does not need to meet transmission speed matching requirements, a modulation structure with lower radio frequency transmission loss can be selected, further improving modulation efficiency. Similarly, the second signal electrode 114 can also use a modulation structure with lower radio frequency transmission loss in the first linear extension portion 110A, while a modulation structure that facilitates transmission speed matching can be used in the second linear extension portion 110C, thereby improving overall device performance.

In some embodiments, the first ground electrode 101, the second ground electrode 103, and the third ground electrode 105 are connected to one another at the curved connection portion 110B.

The first ground electrode 101, the second ground electrode 103, and the third ground electrode 105 are all ground electrodes, and their corresponding potentials are ground potentials. In some embodiments, the first ground electrode 101, the second ground electrode 103, and the third ground electrode 105 can be connected by a bridge connection.

Considering that the length of the ground electrodes in the folding phase modulation module 100 are relatively large, connecting the first ground electrode 101, the second ground electrode 103, and the third ground electrode 105 to one another at the curved connection portion 110B can ensure that the potentials of the three ground electrodes remain stable and consistent, thereby improving the stability of the potential difference between the signal electrode and the ground electrode along the extension direction of the folding phase modulation module, thereby suppressing the degradation of the modulation effect caused by fluctuations in the potential difference at different positions.

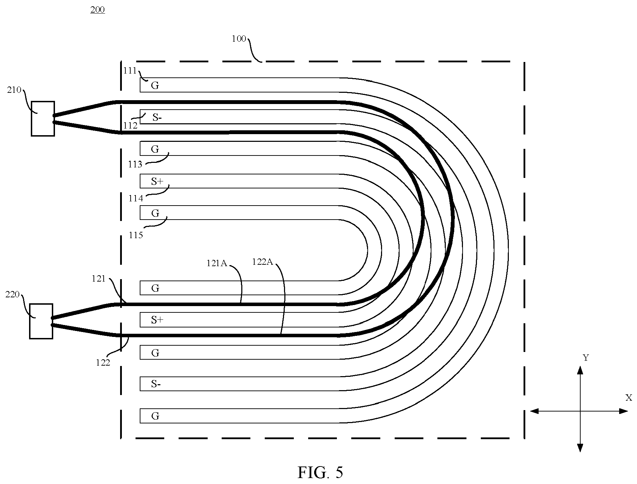

Embodiments of the second aspect of the present disclosure provide an electro-optical modulator, as shown in FIG. 5, which is a schematic diagram of the structure of an electro-optical modulator according to some exemplary embodiments of the present disclosure. The electro-optical modulator 200 comprises a light splitting unit 210, a light combining unit 220, and the folding phase modulation module 100 described in the above embodiments. The light splitting unit 210 is connected to the input end of the folding waveguide 120, and the light combining unit 220 is connected to the output end of the folding waveguide 120.

The light splitting unit 210 may adopt a Y-branch beam splitting optical waveguide, and the light combining unit 220 may adopt a Y-branch beam combining optical waveguide. In one example, the light splitting unit 210 is specifically a 1/2 optical splitter, which is used to split the optical signal into two branch optical signals at a splitting ratio of 1:1 and output them to the input end of the first waveguide 121 and the input end of the second waveguide 122 respectively. The light combining unit 220 is specifically a 2-in-1 optical combiner, which is used to combine the two modulated branch optical signals received from the output end of the first waveguide 121 and the output end of the second waveguide 122 into one modulated optical signal and output it.

It should be understood that in this specification, the terms "center", "longitudinal", "lateral", "length", "width", "thickness", "up", "down", "front", "back", "left", "right", "vertical", "horizontal", "top", "bottom", "inside", "outside", "clockwise", "counterclockwise", "axial", "radial", "circumferential" and the like indicate orientations, positional relationships, or dimensions based on the orientations, positional relationships, or dimensions shown in the drawings. These terms are used only for the convenience of description, and not to indicate or imply that the device or element referred to must have a specific orientation, be configured and operated in a specific orientation, and therefore should not be understood as limiting the scope of protection of the present disclosure.

In addition, the terms "first", "second", "third" etc. are only used for descriptive purposes and cannot be understood as indicating or suggesting relative importance or implicitly indicating the quantity of the indicated technical features. Thus, the feature defined as "first", "second", "third" can expressly or implicitly include one or more of these features. In the description of the present disclosure, the implication of "plurality" is two or more, unless otherwise clearly and specifically limited.

In this disclosure, unless otherwise expressly specified or limited, the terms "installed", "attached", "connected", "fixed", and the like should be understood in a broad sense. For example, they may refer to fixed connection, detachable connection, or integration; they may refer to mechanical connection, electrical connection, or communication; they may refer to direct connection or indirect connection through an intermediate medium; they may refer to internal communication between two elements or interaction between two elements. Those skilled in the art will understand the specific meanings of the above terms in this disclosure based on specific circumstances.

In the present disclosure, unless otherwise expressly specified or limited, a first feature being "above" or "below" a second feature may include the first and second features being in direct contact, or may include the first and second features being in contact not directly but through other features between them. Furthermore, a first feature being "above", "on top of", and "on" a second feature includes the first feature being directly above and obliquely above the second feature, or simply indicates that the first feature is higher in level than the second feature. A first feature being "below", "on the bottom of", and "under" a second feature includes the first feature being directly below and obliquely below the second feature, or simply indicates that the first feature is lower in level than the second feature.

This specification provides many different embodiments or examples that can be used to realize the present disclosure. It should be appreciated that these different embodiments or examples are fully exemplary, and are not used for limiting the scope of protection of the present disclosure in any way. Those skilled in the art can expect various changes or replacements based on the disclosure of the present disclosure's specification, and these should all be encompassed within the scope of protection of the present disclosure. Therefore, the scope of protection of the present disclosure should be determined by the protection scope defined by the appended claims.

## Claims

1. A folding phase modulation module, comprising:
a traveling wave electrode comprising a first ground electrode, a first signal electrode, a second ground electrode, a second signal electrode, and a third ground electrode spaced apart from one another, the traveling wave electrode comprising at least one first linear extension portion, at least one second linear extension portion, and at least one curved connection portion, the first linear extension portion and the second linear extension portion extending in a first direction and alternately arranged in a second direction intersecting the first direction, the ends of any curved connection portion connecting adjacent first linear extension portions and second linear extension portions respectively; and
a folding waveguide having a folding direction that is the same as the folding direction of the traveling wave electrode, the folding waveguide comprising a first waveguide and a second waveguide, the first waveguide and the second waveguide being configured such that opposite electric fields are applied by the first signal electrode at the first linear extension portions, and opposite electric fields are applied by the second signal electrode at the second linear extension portions.

2. The folding phase modulation module according to claim 1, wherein
the first waveguide comprises a plurality of first linear waveguide portions spaced apart from one another along the second direction, and a first curved waveguide portion connecting two adjacent first linear waveguide portions;
the second waveguide comprises a plurality of second linear waveguide portions spaced apart from one another along the second direction, and a second curved waveguide portion connecting two adjacent second linear waveguide portions;
in the first linear extension portion, the first linear waveguide portion and the second linear waveguide portion are respectively located on both sides of the first signal electrode;
in the second linear extension portion, the first linear waveguide portion and the second linear waveguide portion are respectively located on both sides of the second signal electrode.

3. The folding phase modulation module according to claim 2, wherein
in the first linear extension portion, the first linear waveguide portion is located between the first signal electrode and the first ground electrode, and the second linear waveguide portion is located between the first signal electrode and the second ground electrode;
in the second linear extension portion, the first linear waveguide portion is located between the second signal electrode and the third ground electrode, and the second linear waveguide portion is located between the second signal electrode and the second ground electrode.

4. The folding phase modulation module according to claim 2 or 3, wherein
the first linear waveguide portion and the second linear waveguide portion both extend along the first direction;
the length of the first linear waveguide portion is different from the length of the first signal electrode in the first linear extension portion and/or the length of the second signal electrode in the second linear extension portion;
the length of the second linear waveguide portion is different from the length of the first signal electrode in the first linear extension portion and/or the length of the second signal electrode in the second linear extension portion.

5. The folding phase modulation module according to claim 4, wherein
the transmission speed of optical signal in the waveguide is greater than the transmission speed of radio frequency signal in the traveling wave electrode, and the lengths of the first linear waveguide portion and the second linear waveguide portion are both greater than the lengths of the first signal electrode in the first linear extension portion and the second signal electrode in the second linear extension portion; or
the transmission speed of optical signal in the waveguide is lower than the transmission speed of radio frequency signal in the traveling wave electrode, and the lengths of the first linear waveguide portion and the second linear waveguide portion are both greater than the lengths of the first signal electrode in the first linear extension portion and the second signal electrode in the second linear extension portion.

6. The folding phase modulation module according to any one of claims 2 to 5, wherein the product of the length of the first curved waveguide portion and the effective refractive index of the first waveguide is Q1, the product of the length of the second curved waveguide portion and the effective refractive index of the second waveguide is Q2, and 0≤|Q1-Q2|/min{Q1, Q2}≤0.5 is satisfied.

7. The folding phase modulation module according to any one of claims 2 to 6, wherein the length of the first curved waveguide portion is the same as the length of the second curved waveguide portion.

8. The folding phase modulation module according to any one of claims 2 to 6, wherein the length of the first curved waveguide portion is greater than the length of the second curved waveguide portion, and the cross-sectional area of the first curved waveguide portion is smaller than the cross-sectional area of the second curved waveguide portion.

9. The folding phase modulation module according to any one of claims 1 to 8, wherein the first signal electrode and the second signal electrode are configured to receive differential signals.

10. The folding phase modulation module according to any one of claims 1 to 9, wherein
the electrode structure of the first signal electrode in the first linear extension portion is different from the electrode structure thereof in the second linear extension portion; and/or
the electrode structure of the second signal electrode in the first linear extension portion is different from the electrode structure thereof in the second linear extension portion.

11. The folding phase modulation module according to any one of claims 1 to 10, wherein the first ground electrode, the second ground electrode, and the third ground electrode are connected to one another at the curved connection portion.

12. An electro-optical modulator, comprising the folding phase modulation module according to any one of claims 1 to 11.
